## Europäisches Patentamt
## European Patent Office
## Office européen des brevets

(11) Veröffentlichungsnummer: **0 129 008**
**A1**

# (12) EUROPÄISCHE PATENTANMELDUNG

(21) Anmeldenummer: **84103739.3**

(22) Anmeldetag: **05.04.84**

(51) Int. Cl.³: **G 01 N 1/00**
**G 01 N 35/06, G 01 N 15/00**

(30) Priorität: **31.05.83 CH 2971/83**

(43) Veröffentlichungstag der Anmeldung:
**27.12.84 Patentblatt 84/52**

(84) Benannte Vertragsstaaten:
**AT CH DE FR GB IT LI NL SE**

(71) Anmelder: **CONTRAVES AG**
**Schaffhauserstrasse 580**
**CH-8052 Zürich(CH)**

(72) Erfinder: **Bölsterli, Martin**
**Angelikaweg 2**
**CH-8050 Zürich(CH)**

(54) Entleerungssystem.

(57) Entleerungssystem für einen Leitungsabschnitt in einer Vorrichtung zum wahlweisen Fördern von Flüssigkeitsvolumina beispielsweise in einem Teilchenanalysator. Flüssigkeit ist mittels einer Pumpe (18) von einem ersten Gefäss (1) über eine Förderleitung (8) zu einem zweiten Gefäss (2) zu fördern, wobei verschleppung von einer Probe zur nächsten, Schaum, Tropfen und Blasen an der Düse (15) zu vermeiden sind. Auf der Förderleitung ist ein T-förmiges Anschlussstück (10) angeordnet, dessen seitliches Rohr über ein Ventil (27) zu einem Auffanggefäss (5) führt, das mittels einer Pumpe (29) im Unterdruck gehalten wird. Nach dem Schliesse des Ventils und dem Auffüllen des ersten Gefässes wird die Förderpumpe (18) in Betrieb gesetzt. Beim Erreichen eines vorbestimmten Flüssigkeitsvolumens im zweiten Gefäss wird das Ventil geöffnet, worauf die gesamte Flüssigkeit, die sich in den Leitungen und im ersten Gefäss befindet, in das Auffanggefäss gesaugt wird: insbesondere wird in der Düse (15) und in daran anschliessenden Leitungsabschnitt (12) die Flüssigkeit zurückgesaugt. Wenn nur mehr Luft angesaugt wird, können die Pumpen abgeschaltet und der Vorgang wiederholt werden. Das Zurücksaugen an der Düse (15) vermeidet Schaum, Tropfen und Blasen, und die Leitungen werden gut entleert.

FIG. 1

- 1 -

## Entleerungssystem

Die Erfindung betrifft ein Entleerungssystem für mindestens einen Leitungsabschnitt in einer Vorrichtung zum wahlweisen Fördern von Flüssigkeitsvolumina von einem ersten Gefäss zu einem zweiten Gefäss, gemäss dem Oberbegriff des Patentanspruchs 1, sowie ein Verfahren zum Betrieb dieses Entleerungssystems.

Es ist beispielsweise aus der CH-PS 545989 bekannt, in einer Vorrichtung der genannten Art eine Förderleitung vorzusehen, die von einem unteren Teil des ersten Gefässes zu einer Düse führt, die oberhalb des zweiten Gefässes angeordnet ist. Auch sind zum Beispiel aus diesem Dokument Mittel bekannt, die zum Fördern einer im ersten Gefäss enthaltenen Flüssigkeit durch die Förderleitung und zum zweiten Gefäss geeignet sind.

Ferner ist beispielsweise aus der EP-OS 2103-A1 bekannt, für Spülzwecke ein Auffanggefäss vorzusehen, sowie Mittel zum Ansaugen von Flüssigkeit in das Auffanggefäss, eine am Auffanggefäss angeordnete Ansaugleitung für die Flüssigkeit und ein an der Ansaugleitung angeordnetes Ventil zum Sperren oder Freigeben des Durchflusses durch die Ansaugleitung.

Die betrachtete Vorrichtung soll insbesondere in einem Teilchenanalysator zur reihenweisen Analyse von Blutproben verwendet werden. Sie dient dazu, im ersten Gefäss zubereitete Proben in das zweite Gefäss zu fördern, wo diese Proben gemessen werden. Nach erfolgter Messung müssen alle Gefässe und Leitungen gespült und vollständig geleert werden, um Verdünnungsfehler zu vermeiden und Probengut nicht zu verschleppen.

Das einfache Ausblasen der Leitungen in einer Vorrichtung der aus der CH-PS 545989 bekannten Art führt in modernen komplexen Teilchenanalysatoren, in denen Erythrozyten sowie Thrombozyten und Leukozyten gemessen werden, nicht zum gewünschten Resultat. Zur Messung von Leukozyten werden die Blutproben mit einem Hämolysator behandelt, der die Oberflächenspannung der Flüssigkeit so beeinflusst, dass die Proben beim Rühren und beim Durchblasen der Leitungen mit Luft zur Bildung von Schaum, Blasen und Tropfen neigen, insbesondere in Nähe der Düse. Der Schaum lässt sich aus den Gefässen nur schwer wegspülen. Alternierende Messungen von Erythrozyten und Thrombozyten einerseits, Leukozyten andererseits, werden dadurch behindert oder die Spülung und die Leerung der Leitungen werden dadurch sehr aufwendig.

Das Spülen der Leitungen durch eine Spüllösung mittels einer Vorrichtung der aus der EP-OS 2103-A1 bekannten Art ermöglicht zwar, die Probenverschleppung und den Einfluss des Hämolysators weitgehend zu beseitigen, hinterlässt aber gefüllte Leitungen. Beim Leeren dieser Leitungen mittels Ausblasen bilden sich noch immer Blasen und Tropfen insbesondere an der Düse: am Ende des Ausblasvorganges, wenn der Druck und die Luftgeschwindigkeit nachlassen, fliesst die an den Wandungen durch Oberflächenkräfte zurückgehaltene Flüssigkeit langsam zur Düse nach und es bildet sich eine an der Düse hängenbleibende Blase sowie einige alternierende Flüssigkeits- und Luftsegmente in der Leitung und auch etwas Schaum, wenn solche Segmente zur Düse gelangen.

Aufgabe der Erfindung ist, ein Entleerungssystem in einer Vorrichtung der eingangs erwähnten Art zu schaffen, das vor und nach dem Fördern der Proben in das Messgefäss sowie vor und nach dem Spülen der Gefässe und der Förderleitung die Entleerung von Gefässen und Förderleitung ohne Bildung von Schaum und/oder Tropfen ermöglicht. Zur Lösung dieser Aufgabe ist das Entleerungssystem gekennzeichnet durch die im Patentanspruch 1 angegebenen Merkmale, während ein Verfahren zum Betrieb dieses Entleerungssystems gekennzeichnet ist durch die im Patentanspruch 2 angegebenen Verfahrensschritte. Mit diesem Entleerungssystem und mit diesem Verfahren wird erreicht, dass keine nachfliessende Flüssigkeit die Proben verunreinigt oder die Verdünnung der Proben verfälscht, weil die Förderleitung und die Düse vollständig entleert sind und die Reinigung der Gefässe einfacher und

0129008

daher weniger aufwendig ist.

Im folgenden wird die Erfindung anhand der Zeichnung näher erläutert, wobei in der Zeichnung einander entsprechende Teile mit den gleichen Bezugszeichen versehen sind.

Es zeigen:

Fig. 1   eine schematische Darstellung einer mit dem erfindungsgemässen Entleerungssystem versehenen Vorrichtung der eingangs erwähnten Art,

Fig. 2   eine schematische Darstellung einer anderen Ausbildung der Vorrichtung mit dem erfindungsgemässen Entleerungssystem,

Fig. 3   ein Anschlussstück für die Anordnung des Entleerungssystems an der Förderleitung der Vorrichtung, im Schnitt, und

Fig. 4   eine Düse zum Fördern von Flüssigkeit in das zweite Gefäss, im Schnitt.

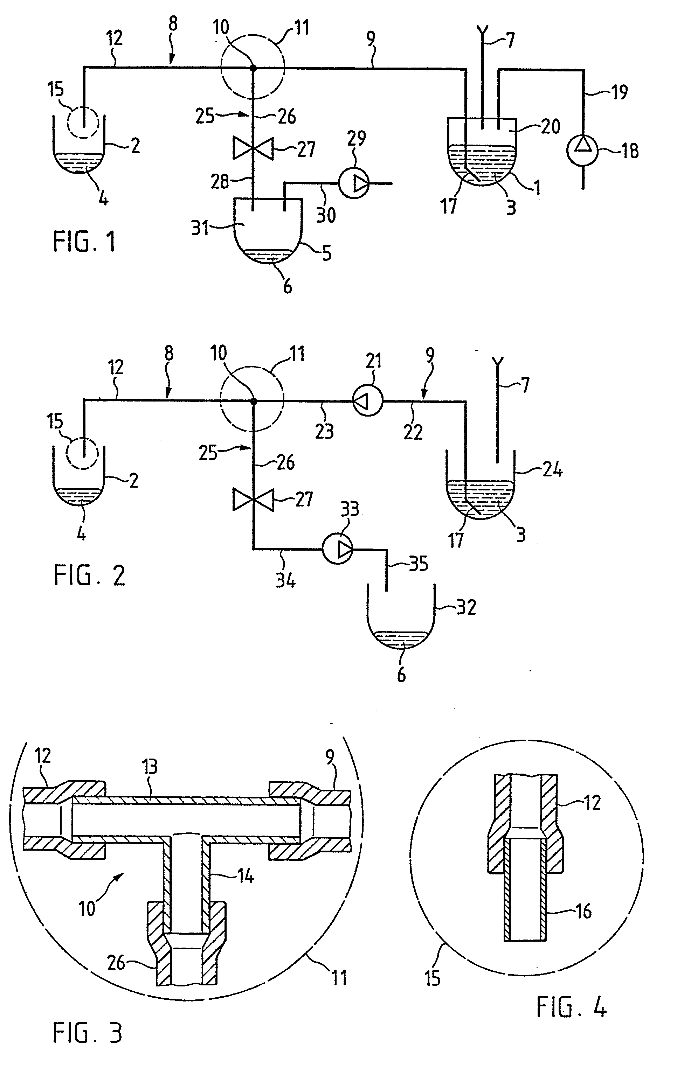

In Fig. 1 sind ein erstes Gefäss 1 und ein zweites Gefäss 2 dargestellt. Im Gefäss 1 ist eine Flüssigkeit 3 enthalten, von der ein gewünschtes Volumen in das Gefäss 2 zu fördern ist: mit dem Bezugszeichen 4 wird das bereits geförderte Flüssigkeitsvolumen bezeichnet. Wenn die Flüssigkeit 4 das gewünschte Volumen erreicht hat, ist der Rest der Flüssigkeit 3 zu beseitigen und das Gefäss 1 vollständig zu entleeren: dazu ist ein Auffanggefäss 5 vorgesehen, das zur Aufnahme der zu beseitigenden Flüssigkeit bestimmt ist. Die im Auffanggefäss 5 bereits aufgenommene Flüssigkeit ist mit dem Bezugszeichen 6 bezeichnet. In das Gefäss 1 kann neue Flüssigkeit 3 über eine Leitung 7 eingefüllt werden.

Zur Förderung der Flüssigkeit 3 vom Gefäss 1 zum Gefäss 2 dient eine Förderleitung, die gesamthaft mit dem Bezugszeichen 8 bezeichnet ist. Ein Teil 9 dieser Förderleitung 8 führt vom Gefäss 1 zu einem Anschlussstück, das gesamthaft mit dem Bezugszeichen 10 bezeichnet und im gestrichelten Kreis 11 symbolisch angedeutet ist. Ein anderer Teil 12 der Förderleitung 8 führt vom Anschlussstück 10 zum Gefäss 2. Die Teile 9 und 12 der Förderleitung bestehen beispielsweise aus einem flexiblen Schlauch aus inertem Kunststoff (Polyvinylchlorid, Polyäthylen oder äquivalentes Material), beispielsweise mit einem Innendurchmesser von etwa 2 mm.

Das Anschlussstück 10 wird nun im Zusammenhang mit Fig. 3 näher beschrieben. Die in Fig. 1 innerhalb des Kreises 11 schematisch oder symbolisch angedeuteten Teile werden in Fig. 3 im Kreis 11 im Schnitt dargestellt. Das Anschlussstück 10 ist T-förmig und etwa gleichschenklig ausgebildet, um drei gleichartige Schläuche miteinander zu verbinden. Es besteht aus einem durchgehenden Rohr 13 und einem seitlichen Rohr 14, die miteinander kommunizieren und deren Innendurchmesser etwa gleich dem Innendurchmesser der Schläuche ist. Wie ersichtlich sind die Teile 9 und 12 der Förderleitung 8 mit dem Anschlussstück 10 derart verbunden, dass die Förderleitung 8 durch das Anschlussstück 10 führt, beziehungsweise das durchgehende Rohr 13 auf der Förderleitung 8 angeordnet ist. Zu diesem Zweck sind je ein Ende der Schläuche, aus welchen die Teile 9 und 12 der Förderleitung 8 bestehen, auf je ein Ende des durchgehenden Rohres 13 aufgezogen, wie aus Fig. 3 ersichtlich ist.

Das vom Anschlussstück 10 abgewendete Ende des Teils 12 der Förderleitung 8 ist in Fig. 1 im gestrichelten Kreis 15 symbolisch angedeutet und wird nun im Zusammenhang mit Fig. 4 näher beschrieben. Am Ende des Schlauches, aus welchem der Teil 12 der Förderleitung 8 besteht, ist eine Düse 16 vorgesehen, die als Rohrstummel von etwa gleichem Innendurchmesser wie der Innendurchmesser der Schläuche ausgebildet ist: das entsprechende Ende des Schlauches, aus welchem der Teil 12 der Förderleitung 8 besteht, ist auf das eine Ende des Rohrstummels aufgezogen, wie in Fig. 4 im Schnitt dargestellt wird.

Das Anschlussstück 10 und die Düse 16 können aus steifem inertem Kunststoff oder aus inertem Metall wie zum Beispiel rostfreiem Stahl bestehen. Auf bekannte Weise können die Enden dieser Teile zum besseren Aufziehen und zum Sichern der Schläuche als Oliven ausgebildet werden. In einer beispielsweisen Ausführung besteht das Anschlussstück 10 aus durchsichtigem Polyacetal, während die Düse aus rostfreien Stahl und dünnwandig (etwa 0,2 mm Wanddicke) ausgebildet ist.

Wie aus Fig. 1 ersichtlich, ist die Düse 16 gegenüber dem Gefäss 2 so angeordnet, dass sie in den oberen Teil des Gefässes 2 einmündet und auch beim höchsten Stand der Flüssigkeit 4 nicht darin eintaucht: die Düse 16 braucht aber nicht vertikal angeordnet zu sein, sie kann die Flüssigkeit auch schräg nach unten spritzen. Das vom Anschlussstück 10 abgewendete Ende 17 des Teils 9 der Förderleitung 8 taucht hingegen in die Flüssigkeit 3 bis zur tiefsten Stelle im unteren Teil des Gefässes 1. Es ist zweckmässig, das Ende 17 des Teils 9 als Rohr auszubilden, auf dessen eines Ende der Schlauch, aus dem der Teil 9 besteht, aufgezogen ist: somit kann das Ende 17 sicher an der tiefsten Stelle des Gefässes 1 positioniert werden, um das vollständige Entleeren des Gefässes 1 zu ermöglichen. Diese Massnahme ist an sich wohlbekannt und wird daher im vorliegenden weder näher beschrieben noch in der Zeichnung dargestellt.

Als Mittel zur Förderung der Flüssigkeit 3 aus dem ersten Gefäss 1 in die Förderleitung 8 in Richtung des zweiten Gefässes 2 wird in der Ausbildung nach Fig. 1 eine Pumpe 18 vorgesehen, die in einer Druckleitung 19 einen Luft-Ueberdruck von etwa 250 mbar erzeugt. Das Gefäss 1 ist als geschlossener Raum ausgebildet, in dessen oberen Teil 20 die Leitungen 19 und 7 einmünden, derart, dass sie nicht in die Flüssigkeit 3 eintauchen; im übrigen ist auf an sich bekannte und daher nicht dargestellte Weise die Leitung 7 mit einem Ventil oder Verschluss versehen, damit die von der Leitung 19 in den Raum 20 übertragene Luft und ihr Ueberdruck nicht durch die Leitung 7 entweichen können. Durch den Luft-Ueberdruck im Raum 20 wird die Flüssigkeit 3 in die Förderleitung 8 gedrückt und in dieser gefördert.

- 6 -

Vorteilhaft ist in dieser Ausbildung insbesondere, dass die Pumpe 18 nur Druckluft erzeugen, also keine Flüssigkeit unmittelbar fördern muss.

In der Ausbildung nach Fig. 2 wird als Mittel zur Förderung der Flüssigkeit 3 aus dem ersten Gefäss in die Förderleitung 8 in Richtung des zweiten Gefässes 2 eine Pumpe 21 vorgesehen, die auf dem Teil 9 der Förderleitung 8 angeordnet ist, das heisst, der Teil 9 der Förderleitung 8 wird von der Pumpe 21 in zwei Teile 22, 23 unterteilt. Die Pumpe 21 muss in dieser Ausbildung fähig sein, sowohl Flüssigkeit als auch Luft in Richtung vom Teil 22 zum Teil 23 der Förderleitung 8 zu fördern; beispielsweise ist die Pumpe 21 eine Schlauchquetschpumpe bekannter Art. Im ersten Gefäss darf sich beim Betrieb der Pumpe 21 kein der Förderung entgegenwirkendes Vakuum einstellen, daher ist in dieser Ausbildung das erste Gefäss 24 zur Atmosphäre hin offen, wie in Fig. 2 dargestellt.

In den beiden Ausbildungen nach Fig. 1 und 2 ist das seitliche Rohr 14 des Anschlussstückes 10 mit einer Ansaugleitung verbunden, die gesamthaft mit dem Bezugszeichen 25 bezeichnet ist. Ein Teil 26 dieser Ansaugleitung 25 besteht wie die Teile 9 und 12 der Förderleitung 8 aus einem Schlauch, dessen eines Ende auf das seitliche Rohr 14 des Anschlussstücks aufgezogen ist (vgl. Fig. 3), derart, dass der Innendurchmesser durchgehend etwa gleich bleibt. Am anderen Ende des Teils 26 der Ansaugleitung 25 ist ein Ventil 27 angeordnet, das die Ansaugleitung sperren oder freigeben kann.

In der Ausbildung nach Fig. 1 führt ein anderer Teil 28 der Ansaugleitung 25 vom Ventil 27 zum Auffanggefäss 5. Als Mittel zum Ansaugen der Flüssigkeit 6 in das Auffanggefäss 5 wird in dieser Ausbildung eine Pumpe 29 vorgesehen, die in einer Saugleitung 30 einen Unterdruck von etwa 250 mbar erzeugt. Das Auffanggefäss 5 ist als geschlossener Raum ausgebildet, in dessen oberen Teil 31 die Saugleitung 30 und der Teil 28 der Ansaugleitung 25 einmünden, derart, dass sie nicht in die Flüssigkeit eintauchen. Durch den Unterdruck im Raum 31 wird bei geöffnetem Ventil 27 Flüssigkeit vom Anschlussstück 10 in das Auffanggefäss 5 angesaugt. Vorteilhaft ist in dieser Ausbildung insbesondere, dass die Pumpe 29 nur Luft zu saugen braucht, also keine Flüssigkeit unmittelbar fördern muss. Die Pumpen 18 und 29 können daher vom technisch gleichen Typ sein.

In der Ausbildung nach Fig. 2 wird als Mittel zum Ansaugen der Flüssigkeit 6 in ein Auffanggefäss 32 eine Pumpe 33 vorgesehen, die auf der Ansaugleitung 25 zwischen dem Ventil 27 und dem Auffanggefäss 32 angeordnet ist, das heisst ein Teil 34 der Ansaugleitung 25 führt vom Ventil 27 zur Pumpe 33 und ein Teil 35 der Ansaugleitung 25 führt von der Pumpe 33 zum Auffanggefäss 32. Die Pumpe 33 muss in dieser Ausbildung fähig sein, sowohl Flüssigkeit als auch Luft in Richtung vom Teil 34 zum Teil 35 der Ansaugleitung 25 zu fördern; beispielsweise ist die Pumpe 21 eine Schlauchquetschpumpe bekannter Art. Im Auffanggefäss 32 darf sich beim Betrieb der Pumpe 33 kein dem Ansaugen entgegenwirkender Ueberdruck einstellen, daher ist in dieser Ausbildung das Auffanggefäss 32 zur Atmosphäre hin offen, wie in Fig. 2 dargestellt.

Mit den beiden beschriebenen Ausbildungen des Entleerungssystems ist es möglich, in einer Vorrichtung zum Fördern von Flüssigkeitsvolumina vom Gefäss 1 oder 25 zum Gefäss 2 über eine Förderleitung 8 letztere - bestehend aus den Leitungsabschnitten 9 und 12 sowie dem durchgehenden Rohr 13 des Anschlussstücks 10 - und zudem auch noch das seitliche Rohr 14 des Anschlusstücks 10 ohne Blasen-, Tropfen- oder Schaumbildung zu entleeren. Dazu wird das Entleerungssystem auf die im nachfolgenden beschriebene Weise, das heisst mit den nachstehend angegebenen aufeinanderfolgenden Schritten betrieben.

a- Herstellen des Ausgangszustands: Das Ventil 27 wird geschlossen und das erste Gefäss 1 oder 24 wird zur Genüge gefüllt, um mehr Flüssigkeit 3 zu enthalten, als das bestimmte gewünschte Flüssigkeitsvolumen 4, das in das zweite Gefäss 2 gefördert werden soll. Bei der Ausbildung nach Fig. 1 herrscht atmosphärischer Druck im Raum 20 und im Gefäss 1. Die Ansaugpumpe 29 oder 33 ist in Betrieb; bei der Ausbildung nach Fig. 1 herrscht Unterdruck im Raum 31 und im Gefäss 5.

b- Die Pumpe 18 oder 21 wird in Betrieb gesetzt, um Flüssigkeit vom ersten Gefäss 1 oder 24 zum zweiten Gefäss 2 zu fördern. Die Förderleitung 8 füllt sich mit und wird durchflossen von Flüssigkeit.

c- Wenn das vorbestimmte gewünschte Flüssigkeitsvolumen im zweiten Gefäss 2 eingefüllt worden ist, soll das weitere Einfüllen gestoppt werden. Zu diesem Zweck wird das Ventil 27 geöffnet: sofort wird die Flüssigkeit am Anschlussstück 10 in das seitliche Rohr 14 angesaugt, statt vom Teil 9 in den Teil 12 der Förderleitung 8 weiterzufliessen. Es versteht sich, dass zum Erreichen dieses Resultats die Saugleistung am Teil 26 der Ansaugleitung 25 grösser sein muss als die Förderleistung am Teil 9 der Förderleitung. In der Ausbildung nach Fig.1 mit zwei Pumpen von etwa gleicher Leistung sind die Längen der Leitungen so bemessen, dass, bei gleichem Flüssigkeitsdurchsatz, zwischen dem Ende 17 des Teils 9 der Förderleitung 8 und dem Anschlussstück 10 ein grösserer Druckabfall entsteht als zwischen dem Anschlussstück 10 und dem Ende des Teils 28 der Ansaugleitung 25 im Raum 31: dann ist am Anschlussstück 10 der Leitungsteil 26 im Unterdruck gegenüber dem Leitungsteil 9. In der Ausbildung nach Fig. 2 sind die Pumpen 21 und 33 so bemessen, dass die Förderleistung der Pumpe 33 grösser ist als die Förderleistung der Pumpe 21: dann ist am Anschlussstück 10 der Leitungsteil 26 im Unterdruck gegenüber dem Leitungsteil 23. In beiden Ausbildungen wird die von dem Leitungsteil 9 oder 23 zufliessende Flüssigkeit vom Leitungsteil 26 vollständig aufgenommen. Der Unterdruck am Leitungsteil 26 sorgt zudem dafür, dass auch die im Leitungsteil 12 - das heisst im Schlauch 12 und in der Düse 16 - enthaltene Flüssigkeit in Richtung des Anschlussteils 10 zurückgesaugt wird. Der Vorgang dauert an, bis das Gefäss 1 oder 32 und die Leitung 8 entleert sind. An der Düse 16 können sich dabei weder Schaum noch Tropfen oder Blasen bilden, da die Flüssigkeit nicht durch die Düse ausgestossen wird. Am Ende dieses Vorganges kann nur mehr Luft durch die Ansaugleitung 25 in das Auffanggefäss 5 oder 32 kommen.

d- Wenn tatsächlich nur mehr Luft durch die Ansaugleitung 25 in das Auffanggefäss 5 oder 32 gelangt, wird die Pumpe 18 oder 21 abgeschaltet.

Anschliessend kann der Verfahrensschritt a) wieder durchgeführt werden: die Verfahrensschritte a) bis d) sind also rekurrent aufeinanderfolgend wiederholbar.

Das beschriebene Entleerungssystem in der beschriebenen Vorrichtung ist beispielsweise in einem Teilchenanalysator verwendbar, einerseits um das Gefäss 2 mit Probenflüssigkeit exakt zu füllen, andererseits um nach erfolgter Messung - genauer gesagt nach jedem Spülen - die Förderleitung 8 in allen ihren Leitungsabschnitten zu entleeren, derart, dass kein Rückstand verbleibt, der mit dem nächsten Flüssigkeitsschub verschleppt werden könnte, und dass weder Schaum noch Tropfen oder Blasen die Präzision der Volumenabmessung oder der Verdünnung der Flüssigkeit beeinträchtigen können.

Bezüglich des Anschlussstücks 10 ist zu bemerken, dass die beschriebene und in Fig. 3 dargestellte T-förmige Ausbildung mit einem geraden durchgehenden Rohr 13 und einem senkrecht dazu angeordneten seitlichen Rohr 14 im wesentlichen aus Kosten- und Konstruktionsgründen bevorzugt wird, jedoch bloss eine von mehreren möglichen Ausbildungen darstellt. Das Anschlussstück 10 kann durchaus stern- oder Y-förmig mit drei Anschlussrohren ausgebildet werden, wobei das durchgehende Rohr als etwa in seiner Mitte abgewinkelt und aus zwei Anschlussrohren bestehend zu betrachten ist. Anhand der Fig. 3 ist eine derartige stern- oder Y-förmige Ausbildung naheliegend, so dass auf eine Darstellung dieser Ausbildung in einer gesonderten Figur verzichtet wird.

Patentansprüche

1. Entleerungssystem für einen Leitungsabschnitt in einer Vorrichtung zum wahlweisen Fördern von Flüssigkeitsvolumina von einem ersten (1;24) zu einem zweiten Gefäss (2), mit einer Förderleitung (8), die von einem unteren Teil des ersten Gefässes zu einer im oberen Teil des zweiten Gefässes angeordneten Düse (16) führt, Mitteln (9,18,19,20;21,22,23) zum Fördern einer im ersten Gefäss enthaltenen Flüssigkeit durch die Förderleitung hindurch in Richtung des zweiten Gefässes, ferner mit einem Auffanggefäss (5; 32), Mitteln (26,28-31;26,33-35) zum Ansaugen von Flüssigkeit in das Auffanggefäss, einer am Auffanggefäss angeordneten Ansaugleitung (25) zum Ansaugen und Einleiten von Flüssigkeit in das Auffanggefäss, und einem an der Ansaugleitung angeordneten Ventil (27), gekennzeichnet durch ein        Anschlussstück (10) mit einem durchgehenden und einem seitlichen Rohr, wobei das durchgehende Rohr (13) auf der Förderleitung angeordnet und das seitliche Rohr (14) mit der Ansaugleitung verbunden ist.

2. Verfahren zum Betrieb des Entleerungssystems nach Patentanspruch 1, gekennzeichnet durch folgende, rekurrent aufeinanderfolgende Verfahrensschritte:

   a- Herstellen eines Ausgangszustands durch Schliessen des Ventils und Auffüllen des ersten Gefässes;

   b- Betätigen der Mittel zur Förderung der Flüssigkeit, worauf Flüssigkeit vom ersten in das zweite Gefäss gefördert wird;

   c- Beim Erreichen eines gewünschten Flüssigkeitsvolumens im zweiten Gefäss, Oeffnen des Ventils, worauf erst Flüssigkeit und dann Luft von der Düse, vom ersten Gefäss, von der Förderleitung und von der Ansaugleitung in das Auffanggefäss gelangen;

   d- Wenn nur mehr Luft in das Auffanggefäss gelangt, Abschalten der Mittel zur Förderung der Flüssigkeit.

0129008

FIG. 1

FIG. 2

FIG. 3

FIG. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-3 747 412 (A.R. JONES) <br> * Spalte 4, Zeilen 36-41; Figur 1 * <br> --- | 1 | G 01 N 1/00 <br> G 01 N 35/06 <br> G 01 N 15/00 |
| A | FR-A-2 271 558 (COOPERATION PHARMACEUTIQUE FRANCAISE) <br> * Seite 5, Zeilen 13-38; Figuren 4-6 * <br> --- | 1 | |
| A | FR-A-2 510 749 (NOVILOIRE S.A.) <br> * Seite 4, Zeile 29 - Seite 5, Zeile 8; Figur 1 * <br> --- | 1 | |
| A | DE-A-2 218 569 (SIEMENS AG) <br> * Seite 8, Zeilen 1-9; Figur 1 * <br> --- | 1 | |
| | | | RECHERCHIERTE SACHGEBIETE (Int. Cl. ³) |
| A | US-A-4 179 932 (H.O. RANGER) <br> * Spalte 3, Zeile 67 - Spalte 4, Zeile 22; Figur 4 * <br> --- | 1 | |
| D,A | EP-A-0 002 103 (BECTON, DICKINSON) <br> ----- | | G 01 N 1/00 <br> G 01 N 35/00 <br> G 01 N 15/00 |

Der vorliegende Recherchenbericht wurde für alle Patentansprüche erstellt.

| Recherchenort <br> DEN HAAG | Abschlußdatum der Recherche <br> 07-09-1984 | Prüfer <br> ANTHONY R.G. |
|---|---|---|